Europäisches Patentamt

European Patent Office

Office européen des brevets

(11) Publication number: **0 310 301**
**A1**

## EUROPEAN PATENT APPLICATION

(21) Application number: 88308807.2

(51) Int. Cl.⁴: **B60C 11/01 , B60C 11/12**

(22) Date of filing: 22.09.88

(30) Priority: 29.09.87 JP 246857/87

(43) Date of publication of application:
05.04.89 Bulletin 89/14

(84) Designated Contracting States:
DE FR GB

(71) Applicant: SUMITOMO RUBBER INDUSTRIES
LIMITED
No. 1-1, Tsutsui-cho 1-chome
Chuo-ku Kobe-shi Hyogo 651(JP)

(72) Inventor: Iuchi, Munenori
1-46-1205 Minatojima nakamachi 3-chome
Chuo-ku Kobe-shi Hyogo-ken(JP)

(74) Representative: Stewart, Charles Geoffrey
SP TYRES UK LIMITED Tyre Technical
Division
Fort Dunlop Erdington Birmingham B24
9QT(GB)

(54) Pneumatic tyre.

(57) A pneumatic tyre comprising a tread (2) having a shoulder rib (R1, R2) extending circumferentially along the edge of the tread (2), wherein the shoulder rib (R1, R2) is provided with a circumferentially extending sipe (S) having substantially no width, whereby both the generation and spread of local wear are controlled, and as a result shoulder wear is effectively prevented.

FIG.1

## PNEUMATIC TYRE

The present invention relates to a pneumatic tyre provided with shoulder ribs in the tread which may be of a rib pattern or a rib-block pattern, and in particular to an improvement in the tread pattern to reduce shoulder wear in pneumatic tyres for heavy duty vehicles such as trucks, buses and the like.

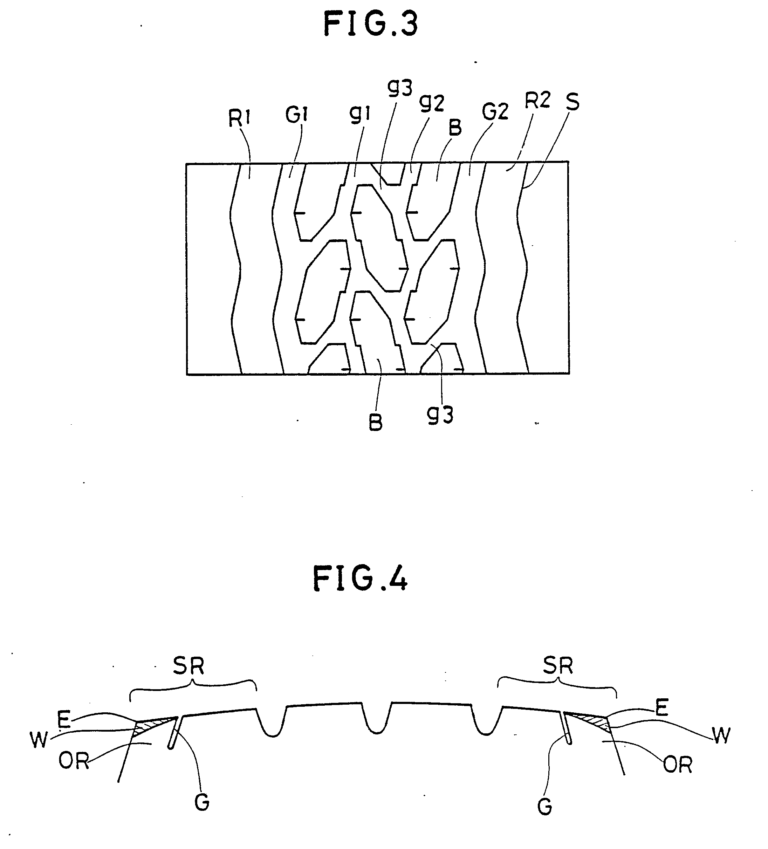

According to the carcass structure, pneumatic tyres are usually classified into bias tyres and radial tyres, and there are various kinds of tread patterns such as rib type, block type, lug type, rib-block type, rib-lug type, lug-block and the like. They are selected in accordance with the use. In tyres of rib pattern and rib-block pattern having shoulder ribs in the axially outermost portions of the tread, and particularly in such radial tyres for heavy duty vehicles, shoulder wear is apt to occur. This shoulder wear is a kind of abnormal wear. Due to cornering of the vehicle and the like, local wear is generated in some areas of the shoulder rib such as the outer edge portion. Such wear regions are spread in the circumferential direction and also in the axial direction of the tyre and are caused by the difference in diameter at the shoulder when cornering. As a result, the shoulder ribs wear more rapidly than the other rib(s) and/or blocks located inwardly thereof. To reduce such shoulder wear it has been proposed as shown in Fig. 4 to arrange a narrow groove G in each shoulder rib SR to prevent the axially inward spread of the local wear in the edge portions E of the shoulder ribs SR. Such a narrow groove G as in the prior art is reasonably effective in preventing the inward spread of the local wears. The narrow groove required has a width of 1 to 6 mm and the causes the resultant narrow rib OR formed on the outside of the groove G to work as an independent rib. This result is that the wear shown by the hatching is rather rapidly spread throughout the rib as whown.

Further more, the narrow rib or must be considered as a shoulder rib because the rib is an independent rib as described above. Thus on this bases the problem of shoulder wear is essentially not solved at all but accentuated in the narrow rib.

It is, therefore, an object of the present invention to provide a pneumatic tyre, in which shoulder wear is effectively prevented not by narrowing the actual shoulder ribs as in the above-mentioned prior art to reduce the appearance of wear, but by providing a circumferentially extending sipe in the shoulder ibe to restrain the generation and spread of the local wear.

According to one aspect of the present invention, a pneumatic tye is provided in a shoulder rib located in the outermost part of the tread with a circumferentially extending sipe.

The above-mentioned sipe preferably is a cut having substantially no width formed in the tread surface of a prevulcanized tyre, using a siping machine.

Because the above-mentioned sipe extendeds in the circumferential direction of the tyre, the sipe can decrease the lateral stiffness of the shoulder rib to reduce the localised slip while cornering which causes the local wear and as a result the generation of local wear is controlled.

Furthermore, as the sipe has no substantial width, the rubber regions on both sides of the sipe are supported by one another to lessen unfavourable movement thereof. As a result, the increase in the spreading spread of any localised wear is controlled, and at the same time the inward spread of any localised wear is prevented.

Moreover, the sipe can unify the ground contacting pressure of the shoulder rib in both the outside and inside parts thereof with regard to the sipe, and lessens the wear caused by the difference in diameter.

Examples of the present invention will now be explained in accordance with the accompanying drawings, in which:

Fig. 1 is a partial view showing the tread of an embodiment of the present invention;

Fig. 2 is a sectional view taken along the line A-A of Fig. 1 ;

Fig 3 is a partial view showing the tread of another embodiment of the presnet invention; and

Fig 4 is a sectional view showing the tread according to the prior art. In figs 1 and 2 showing the first example of the invention, the pneumatic tyre 1 has a circumferentially extending sipe S in each of shoulder ribs R1 and R2 located in the respective outermost parts of the tread 2.

The tread 2 is provided with at least one main groove. in this example, three main grooves G1, G2 and G3, so that the tread is divided into at least two ribs, in this example, four ribs R1, R2, R3 and R4, and then the shoulder ribs R1 and R2 formed in the axially outermost parts of the tread along the tread edges 3 are provided with the sipes S.

The main grooves G1 to G3 extend circumferentially in a zigzag or wavy form and in this example extend in a zigzag form in parallel with each other.

Each sipe S extends circumferentially in a zigzag or wavy form so as to be parallel with the main groove (G1, G2) which divides the shoulder rib (R1 or R2) is which the sipe S is provided. Thus, in this example, it extends in the same zigzag form as that of the main groove.

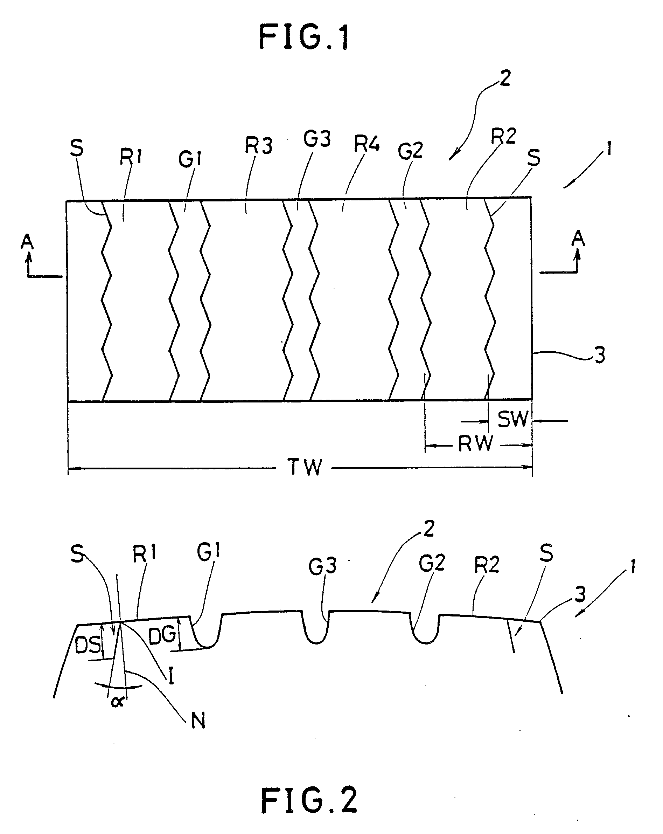

The depth DS of the sipe S (see Fig 2) is not less than 30% of the depth DG of the main groove (G1 or G2) which divides the shoulder rib (R1 or R2) in which the sipe S is provides.

The distance SW of the sipe S from the tread edge 3 is in a range of 5 to 20% of the width TW of the tread and also preferably not more than 50% of the width RW of the shoulder rib.

As shown in Fig 2, the sipe S is inclined towards the tread edge 3 at a small angle, so that the radially inner end thereof is located axially outwardly of the outer end thereof.

The inclination angle ($\alpha$) of the sipe is not more than 20 degrees with respect to a normal line N on the tread surface at the intersecting point I of the sipe S with the tread surface.

Fig 3 shows a second example of the present invention. In this example, the tread 2 is divided into two sholder ribs R1 and R2, and three rows of blocks B by two main grooves G1 and G2 and circumferentially extending auxiliary grooves g1 and g2 and axially extending auxiliary grooves g3 which are arranged between the main grooves G1 and G2. The main grooves G1 and G2 extend circumferentially in a wavy form, and accordingly the sipes S are provided similarly and extend in a wavy form in a parallel with these respective main grooves.

In the above-mentioned two examples, each of the shoulder ribs R1 and R1 is provided with a sipe S. However, shoulder wear is apt to occur more in the shoulder rib located on the outside of the vehicle rather than in that on the inside thereof. Therefor the sipe may be provided in only one of the shoulder ribs, and in this case the tyre should be mounted on the vehicle in such a manner that the shoulder rib provided with the sipe is located on the outside of the vehicle.

When the width RW of the shoulder rib is comparatively wide, the shoulder rib is preferably provided with a plurality of sipes. In such a case, the sipes S are arranged parallel to each other, and the depths are set in such a manner that: the sipes have the same depth, or the further inwards a sipe is located then the shallower its depth is.

Each of the pneumatic tyres 1 in the above-mentioned working examples is a heavy duty radial tyre for trucks, buses and the like, the structure of which is briefly explained as below. Detailed explanation is omitted because it is possible to employ any of the known structures. The examples comprise a carcass reinforced by a radial ply of steel cords each edge of which is turned up around one of a pair of bead cores and terminated at a position radially outside its bead core; a belt between the tread and the carcass composed of a plurality of plies of stell cord fabric and a bead reinforcing layer composed of a steel cord ply and/or an organic fibre cord ply.

As mentioned above, in the pneumatic tyre according to the present invention, the shoulder rib is provided with a circumferentially extending sipe, whereby both the generation and spread of local wear are controlled, and as the result shoulder wear is effectively prevented in contrast to the prior art wherein the original shoulder rib is axially divided by a groove having a certain width to form a narrow independent rib which acts as an independent shoulder rib to reduce only the appearance of the shoulder wear.

## Claims

1. A pneumatic tyre, comprising a tread (2) having a shoulder rib (R1, R2) extending circumferentially along the edge of the tread (2) characterised by a circumferentially extending sipe (S) formed in said shoulder rib (R1, R2)

2. A pneumatic tyre according to claim 1 characterised in that the sipe S is cut in the tread after vulcanisation rather than being moulded in said tread.

3. A pneumatic tyre according to claim 1 or 2 characterised in that said sipe (S) has no substantial width and a depth (DS) not less than 30% of the depth (DG) of a main groove (G1, G2) which defines said shoulder rib (R1, R2)

4. A pneumatic tyre according to claim 1 or 2 characterised in that said sipe (S) extends circumferentially of the tyre in a zigzag or wavy form.

5. A pneumatic tyre according to claim 1,2,3 or 4 characterised in that the sipe (S) is parallel to a main groove (R1,R2) which defines said shoulder rib (R1, R2)

6. A pneumatic tyre according to any one of claims 1 to characterised in that the sipe (S) is inclined to the normal to the tread surface at an angle of not more than 20 degrees at the intersecting point of the said sipe (S) and the said tread surface.

7. A pneumatic tyre according to any one of claims 1 to 6 characterised in that a sipe (S) is provided a both shoulder ribs (R1 and R2) of the tyre tread (2).

# FIG.1

# FIG.2

# FIG.3

R1    G1    g1    g3    g2    B    G2    R2    S

B    g3

# FIG.4

SR                                SR

E                                        E
W                                        W
OR                                      OR

G                                G

## DOCUMENTS CONSIDERED TO BE RELEVANT

EP 88308807.2

| Category | Citation of document with indication, where appropriate, of relevant passages | Relevant to claim | CLASSIFICATION OF THE APPLICATION (Int. Cl.4) |
|---|---|---|---|
| A | EP - A2 - 0 160 541 (BRIDGESTONE CORPORATION)<br><br>* Fig. 1a,1b; page 6, lines 3-20 *<br><br>-- | 1,3-5, 7 | B 60 C 11/01<br><br>B 60 C 11/12 |
| A | EP - A2 - 0 199 570 (SUMITOMO RUBBER INDUSTRIES LIMITED)<br><br>* Abstract; fig. 1,2 *<br><br>-- | 1,2 | |
| A<br>P | JP - A - 61-229 603<br>& US-A-4 756 352 (OGAWA et al.)<br><br>* Fig. 1A-2B *<br><br>---- | 1 | |

**TECHNICAL FIELDS SEARCHED (Int. Cl.4)**

B 60 C

The present search report has been drawn up for all claims

| Place of search | Date of completion of the search | Examiner |
|---|---|---|
| VIENNA | 27-12-1988 | WIDHALM |